# EUROPÄISCHE PATENTSCHRIFT

(11) **EP 3 261 060 B1**
(45) Veröffentlichungstag und Bekanntmachung des Hinweises auf die Patenterteilung: **04.08.2021**
(21) Anmeldenummer: 16176187.9
(22) Anmeldetag: 24.06.2016
(51) Int. Cl.: G07C 9/15, G07C 9/28, G08G 1/017, G08G 1/042, G08G 1/14, G07B 15/04, H04W 4/80

(54) **VERFAHREN ZUR ZUGANGSKONTROLLE BEI EINEM ZUGANGSKONTROLLSYSTEM FÜR PERSONEN ODER FAHRZEUGE SOWIE ZUGANGSKONTROLLSYSTEM**
METHODS FOR CONTROLLING ACCESS IN AN ACCESS CONTROL SYSTEM FOR PERSONS OR VEHICLES AND ACCESS CONTROL SYSTEM
PROCÉDÉS DE CONTRÔLE D'ACCÈS DANS UN SYSTÈME DE CONTRÔLE D'ACCÈS POUR PERSONNES OU VÉHICULES AUTOMOBILES ET SYSTÈME DE CONTRÔLE D'ACCÈS

(43) Veröffentlichungstag der Anmeldung: 27.12.2017
(73) Patentinhaber: SKIDATA AG, 5083 Grödig/Salzburg (AT)
(72) Erfinder: Dr. Schlechter, Thomas, 5201 Seekirchen am Wallersee (AT); Dr. Surkau, Reinhard, 83278 Traunstein (DE)
(74) Vertreter: Karakatsanis, Georgios

(56) Entgegenhaltungen:
- EP-A1- 2 894 610
- EP-A2- 3 009 991
- WO-A1-2016/041170
- FR-A1- 2 830 358
- GB-A- 2 525 765
- US-A- 4 627 193
- US-A1- 2007 025 315
- US-A1- 2015 084 741
- US-A1- 2015 339 870

## Beschreibung

Die vorliegende Erfindung bezieht sich auf Verfahren zur Zugangskontrolle bei einem Zugangskontrollsystem für Personen oder Fahrzeuge gemäß dem Oberbegriff des Patentanspruchs 1 oder 3. Des Weiteren bezieht sich die Erfindung auf ein Zugangskontrollsystem für Personen oder Fahrzeuge zur Durchführung des Verfahrens gemäß Patentanspruch 3.

Aus dem Stand der Technik sind Verfahren und Systeme zur Zugangskontrolle für Personen oder Fahrzeuge bekannt. Hierbei ist in der Regel vorgesehen, eine Zugangskontrolle mittels des berührungslosen Auslesens von Zugangsberechtigungen durchzuführen, wobei Zugangskontrollvorrichtungen vorgesehen sind, die Mittel zum Erfassen und Auswerten der Zugangsberechtigungen sowie mechanische oder sonstig ausgeführte Sperrorgane aufweisen, die nach Vorliegen einer gültigen Zugangsberechtigung automatisch oder manuell von einer Sperrstellung in eine Freistellung überführt werden.

Zum berührungslosen Auslesen von Zugangsberechtigungen werden in der Regel RFID-Leseeinrichtungen verwendet, umfassend zumindest eine RFID-Antenneneinheit, welche mit RFID-Transpondern als Datenträger zum Auslesen einer Zugangsberechtigung kommuniziert. In nachteiliger Weise ist die Reichweite einer nach dem Stand der Technik durchgeführten RFID-Interaktion zwischen einer RFID-Antenneneinheit und einem RFID-Transponder relativ gering. Langreichweitige RFID-Interaktionen erfolgen im Mikrowellenbereich und verbrauchen viel Energie, so dass in nachteiliger Weise zur Versorgung eines RFID-Transponders mit Energie eine eigene Stromversorgung auf dem Transponder benötigt wird oder aber die RFID-Leseeinrichtung mit unverhältnismäßig hoher Leistung abstrahlen muss.

Ein weiterer Nachteil der aus dem Stand der Technik bekannten Verfahren zur Zugangskontrolle mittels RFID-Interaktion zwischen einer Leseeinrichtung und einem RFID-Transponder liegt darin, dass die Anzahl der mobilen Geräte, welche RFID-Standards unterstützen, relativ gering ist. Somit werden oft RFID-Transponder als Datenträger für Zugangsberechtigungen verwendet, was zum einen in höheren Kosten und zum anderen in der Notwendigkeit des Mitführens einer weiteren Komponente für die Benutzer des Zugangskontrollsystems resultiert.

Aus der US 2015/084741 A1 geht ein Verfahren zur Interaktion zwischen einem mobilen elektronischen Gerät und einer Zugangskontrollvorrichtung , im Rahmen dessen eine Zugangskontrolle durchgeführt wird, wenn ein mobiles elektronisches Gerät in einem definierten Bereich lokalisiert wird. Hierbei wird von einem Server ein Befehl generiert, der an die mobilen elektronischen Geräte übermittelt wird, wobei die mobilen elektronischen Geräte nach Erhalt des vom Server generierten Befehls ein "Security Token" an den Server übermitteln.

Aus der US 2007/025315 A1 ist ein Verfahren zur Zugangskontrolle bei einem Zugangskontrollsystem für Personen oder Fahrzeuge umfassend zumindest eine Zugangskontrollvorrichtung bekannt, im Rahmen dessen die Überprüfung einer Zugangsberechtigung anhand der Auswertung einer von einem einer Zugangskontrollvorrichtung des Zugangskontrollsystems in Zugangsrichtung am nächsten befindlichen mobilen elektronischen Gerät durch einen Standard zur drahtlosen Kommunikation mit einer ersten Sendeleistung im Rahmen eines "Broadcasting" in regelmäßigen Abständen gesendeten ID, der zumindest eine Zugangsberechtigung eindeutig zugeordnet ist erfolgt, welche von Sende-Empfangseinheiten in Reichweite des mobilen elektronischen Gerätes empfangen wird. Hierbei ist vorgesehen, dass ein mobiles elektronisches Gerät in der Nähe einer Zugangskontrollvorrichtung erkannt wird, wenn mittels des selben Standards mit einer zweiten Sendeleistung, die geringer als die erste Sendeleistung ist, eine Verbindung zwischen dem mobilen elektronischen Gerät und der Zugangskontrollvorrichtung hergestellt wird.

Zudem wird durch die Sperrorgane der verwendeten Zugangskontrollvorrichtungen und die damit einhergehende Blockade des Zutritts der Zugang, insbesondere für Personen unkomfortabel gestaltet. Die in Verbindung mit den Sperrorganen durchgeführte Zugangskontrolle resultiert demnach in Stress, wodurch das Freizeitvergnügen signifikant beeinträchtigt wird. Hinzu kommt, dass bei getaktet fahrenden Transportmitteln, wie beispielsweise bei Seilbahnen oder Skiliften, das Vorsehen der Sperrorgane oft dazu führt, dass die Förderkapazität der Transportmittel nicht im vollen Umfang ausgenutzt wird.

Der vorliegenden Erfindung liegt die Aufgabe zugrunde, ein Verfahren zur Zugangskontrolle bei einem Zugangskontrollsystem für Personen oder Fahrzeuge, wobei das Zugangskontrollsystem einen mehrspurigen Zugang aufweist und wobei jeder Zugangsspur eine Zugangskontrollvorrichtung zugeordnet ist, anzugeben, durch dessen Durchführung die Zugangskontrolle vereinfacht wird. Ferner soll ein Zugangskontrollsystem für Personen oder Fahrzeuge, insbesondere zur Durchführung des erfindungsgemäßen Verfahrens angegeben werden.

Diese Aufgabe wird für ein Verfahren durch die Merkmale des Patentanspruchs 1 bzw. des Patentanspruchs 3 gelöst. Ein Zugangskontrollsystem für Personen oder Fahrzeuge, wobei das Zugangskontrollsystem einen mehrspurigen Zugang aufweist und wobei jeder Zugangsspur eine Zugangskontrollvorrichtung zugeordnet ist, ist Gegenstand des Patentanspruchs 11. Weitere erfindungsgemäße Ausgestaltungen und Vorteile gehen aus den Unteransprüchen hervor.

Demnach wird ein Verfahren zur Zugangskontrolle bei einem Zugangskontrollsystem für Personen oder Fahrzeuge, wobei das Zugangskontrollsystem einen mehrspurigen Zugang aufweist und wobei jeder Zugangsspur eine Zugangskontrollvorrichtung zugeordnet ist, vorgeschlagen, im Rahmen dessen die Überprüfung einer Zugangsberechtigung anhand der Auswertung einer von einem einer Zugangskontrollvorrichtung des Zugangskontrollsystems in Zugangsrichtung am nächsten befindlichen mobilen elektronischen Gerät durch einen ersten Standard, beispielsweise den Bluetooth Low Energy-Standard (im Folgenden BLE genannt) im Rahmen eines "Broadcasting" in regelmäßigen Abständen gesendeten ID, der zumindest eine Zugangsberechtigung eindeutig zugeordnet ist, erfolgt, welche von mit einem Computer, beispielsweise einem Server, umfassend eine CPU und Speichermittel verbundenen Sende- Empfangseinheiten in Reichweite des mobilen elektronischen Gerätes empfangen wird.

Ein einer Zugangskontrollvorrichtung in Zugangsrichtung am nächsten befindliches mobiles elektronisches Gerät im Sinne der Erfindung ist ein mobiles elektronisches Gerät, dessen Benutzer bzw. die Person, die es bei sich trägt, sich für den Fall einer Zugangskontrollvorrichtung für Personen in der Zugangsspur direkt vor dem Übergang zwischen dem vom Zugangskontrollsystem abgedeckten Gebiet und dem nicht vom Zugangskontrollsystem abgedeckten Gebiet befindet und sich für den Fall einer Zugangskontrollvorrichtung für Fahrzeuge in einem Fahrzeug in der Zugangsspur direkt vor dem Übergang zwischen dem vom Zugangskontrollsystem abgedeckten Gebiet und dem nicht vom Zugangskontrollsystem abgedeckten Gebiet befindet.

Gemäß der Erfindung wird ein mobiles elektronisches Gerät als das einer Zugangskontrollvorrichtung in Zugangsrichtung am nächsten befindliche mobile elektronische Gerät erkannt, wenn mittels eines zweiten Standards, welcher eine Reichweite aufweist, die einen Bereich um die Zugangskontrollvorrichtung abdeckt, in dem sich bei einem Zugangskontrollsystem für Personen unter normalen Betriebsbedingungen nur eine Person oder bei einem Zugangskontrollsystem für Fahrzeuge unter normalen Betriebsbedingungen nur ein Fahrzeug befinden kann, eine Verbindung zwischen dem mobilen elektronische Gerät und der Zugangskontrollvorrichtung hergestellt wird oder wenn das mobile elektronische Gerät ein kurzreichweitiges Signal empfängt, welches von der Zugangskontrollvorrichtung emittiert wird und eine Reichweite aufweist, die einen Bereich um die Zugangskontrollvorrichtung abdeckt, in dem sich nur eine Person oder ein Fahrzeug befinden kann. Der erste Standard weist eine Reichweite auf, die mindestens so groß ist, wie die Reichweite des zweiten Standards oder des von der Zugangskontrollvorrichtung emittierten Signals. Die Reichweite des von der Zugangskontrollvorrichtung emittierten Signals ist im Sinne der Erfindung die maximale Entfernung zu der Zugangskontrollvorrichtung, bei der das Signal von einem mobilen elektronischen Gerät noch erfassbar ist.

Die ID kann z.B. eine Seriennummer des mobilen elektronischen Gerätes sein.

Die Verwendung des Bluetooth Low Energy-Standards, im Folgenden BLE genannt, als ersten Standard resultiert in einem deutlich geringeren Stromverbrauch als beim herkömmlichen Bluetooth-Standard und in vorteilhafter Weise dennoch in einer hohen Reichweite, die bis zu 100 Meter betragen kann. Als erster Standard kann ferner jeder geeignete Standard verwendet werden, beispielsweise ein WLAN- oder UWB- Standard. Beide letztgenannten Standards sind geeignet, um die notwendige Information (z.B. eine ID) über eine ausreichend große Distanz, vergleichbar derjenigen des BLE Standards, zu übertragen.

Der zweite Standard ist ein im Vergleich zum ersten Standard. beispielsweise zum BLE-Standard, kurzreichweitiger Standard. Hierfür kommen zahlreiche Standards in Frage, wie beispielsweise NFC, herkömmliche RFID-Standards, oder z.B. das Auslesen eines Barcodes mittels Scanner. Ein geeigneter Standard ist in diesem Zusammenhang vorzugsweise ein Standard, welcher keine zusätzliche Interaktion des Benutzers erfordert und vom Benutzer ohne zusätzliche Geräte außer dem mobilen elektronischen Gerät zur Verfügung gestellt werden kann und die notwendige geringere Reichweite als der erste Standard aufweist.

Gemäß einer Ausgestaltung der Erfindung ist das von der zumindest einen Zugangskontrollvorrichtung emittierte Signal ein Signal, welches durch ein herkömmliches mobiles elektronisches Gerät empfangen werden kann, nämlich ein Signal, welches von einem ohnehin vorhandenen Magnetfeldsensor eines mobilen elektronischen Gerätes, insbesondere eines Tablets oder Mobiltelefons empfangen werden kann.

Im Rahmen dieser Ausgestaltung der Erfindung ist jeder Zugangskontrollvorrichtung zumindest ein elektronisches Bauteil, umfassend zumindest einen Elektromagneten zugeordnet, mittels dessen das Magnetfeld gezielt in einem definierten Bereich um die Zugangskontrollvorrichtung derart beeinflussbar ist, dass dies von einem sich in diesem Bereich befindenden mobilen elektronischen Gerät erfasst werden kann, wobei der Bereich derart gewählt ist, dass sich in diesem Bereich nur eine Person oder ein Fahrzeug befinden kann. Dies kann insbesondere dann von Vorteil sein, wenn der Bereich um die Zugangskontrollvorrichtung, in dem die Beeinflussung des Magnetfeldes durch die Zugangskontrollvorrichtung erfassbar ist, gezielt definiert werden soll.

Hierbei ist das zumindest eine elektronische Bauteil derart ausgeführt und/oder angeordnet und/oder abgeschirmt, dass die Beeinflussung des Magnetfeldes in einem definierten Winkelbereich um die Zugangskontrollvorrichtung erfassbar ist. Dadurch kann die Beeinflussung des Magnetfeldes nur von mobilen elektronischen Geräten erfassbar sein, die sich in Zugangsrichtung der Zugangskontrollvorrichtung und entlang der Zugangsspur nähern. Auf diese Weise wird für den Fall eines Zugangskontrollsystems mit einem mehrspurigen Zugang, wobei jeder Zugangsspur eine Zugangskontrollvorrichtung zugeordnet ist, das der jeweiligen Zugangskontrollvorrichtung in Zugangsrichtung entlang der Zugangsspur am nächsten befindliche mobile elektronische Gerät auf einfache Weise und mit hoher Genauigkeit ermittelt. Ferner kann der zumindest eine Elektromagnet des zumindest einen elektronischen Bauteils derart angesteuert werden, dass das erzeugte Magnetfeld eine der Zugangskontrollvorrichtung zugeordnete eindeutige Charakteristik aufweist, was z.B. über eine definierte Amplitudenmodulation, die sich von der Amplitudenmodulation der den anderen Zugangskontrollvorrichtungen zugeordneten Elektromagneten unterscheidet erzielbar ist, um auf diese Weise die jeweilige Zugangskontrollvorrichtung zu identifizieren. Beispielsweise können die elektronischen Bauteile in die jeweilige Zugangskontrollvorrichtungen integriert sein oder als separate Bauteile ausgeführt sein.

Gemäß der Erfindung erfolgt die Auswertung einer von einem elektronischen Gerät durch den ersten Standard im Rahmen eines "Broadcasting" in regelmäßigen Abständen gesendeten ID, der zumindest eine Zugangsberechtigung eindeutig zugeordnet ist nur dann, wenn das elektronische Gerät als das einer Zugangskontrollvorrichtung in Zugangsrichtung am nächsten befindliche mobile elektronischen Gerät erkannt worden ist. Hierbei wird im Rahmen eines "Broadcasting" mittels des ersten Standards auch die Information übermittelt, dass mittels des zweiten Standards eine Verbindung zwischen dem mobilen elektronischen Gerät und der Zugangskontrollvorrichtung hergestellt ist oder dass das mobile elektronische Gerät das kurzreichweitige Signal empfängt, welches von der Zugangskontrollvorrichtung emittiert ist.

Wenn sich mehrere Personen oder Fahrzeuge in der Nähe einer Zugangskontrollvorrichtung befinden, wird durch die erfindungsgemäße Konzeption der Vorteil erzielt, dass eine aufwändige und oft ungenaue Ermittlung des der Zugangskontrollvorrichtung in Zugangsrichtung am nächsten befindlichen mobilen elektronischen Gerätes entfällt.

Eine Zugangskontrollvorrichtung im Sinne der Erfindung kann einem Eingang bzw. einer Einfahrt oder einem Ausgang bzw. einer Ausfahrt zugeordnet sein, wobei am Ausgang bzw. an der Ausfahrt überprüft wird, ob die Gebühr für den Aufenthalt in dem vom Zugangskontrollsystem abgedeckten Gebiet entrichtet worden ist.

Erfindungsgemäß wird im Falle der Herstellung einer Verbindung über den zweiten Standard zwischen dem mobilen elektronischen Gerät und einer Zugangskontrollvorrichtung über den zweiten Standard an das mobile elektronische Gerät eine ID der Zugangskontrollvorrichtung übermittelt, die im Rahmen des "Broadcasting" über den ersten Standard mitgesendet wird, so dass bei gültiger Zugangsberechtigung die "richtige" Zugangskontrollvorrichtung, nämlich die Zugangskontrollvorrichtung der sich das mobile elektronischen Gerät am nächsten befindet, identifiziert und ggf. aktiviert wird, um z.B. Zugang zu gewähren. Wenn die Ermittlung des einer Zugangskontrollvorrichtung am nächsten befindlichen mobilen elektronischen Gerätes anhand des Empfangs eines kurzreichweitigen Signals erfolgt, welches von einer Zugangskontrollvorrichtung emittiert wird, weist das Signal eine eindeutige Charakteristik auf, welche im Rahmen des "Broadcasting" über den ersten Standard mitgesendet wird, um die Zugangskontrollvorrichtung, der sich das mobile elektronischen Gerät am nächsten befindet, im mit den Sende-Empfangseinheiten datentechnisch verbundenen Computer zu identifizieren. Hierbei können im Computer bzw. Server, mit dem die Sende- Empfangseinheiten nach dem ersten Standard datentechnisch verbunden sind, die Charakteristiken der von der jeweiligen Zugangskontrollvorrichtung emittierten kurzreichweitigen Signale gespeichert sein, um die Identifizierung der Zugangskontrollvorrichtung zu ermöglichen. Im Falle des aktiven Aussendens eines Signals bzw. eines amplitudenmodulierten Magnetfeldes kann die Charakteristik den Amplitudenverlauf oder Amplitudenverhältnisse in einem definierten Zeitintervall enthalten.

Gemäß einer Weiterbildung der Erfindung kann der Magnetfeldsensor der in Reichweite des ersten Standards befindlichen mobilen elektronischen Geräte mittels eines über den ersten Standard übermittelten Befehls aktiviert werden. Im Rahmen einer Variante der Erfindung können nach Detektion eines mobilen elektronischen Gerätes über den ersten Standard an das mobile elektronische Gerät die Charakteristiken der der von der jeweiligen Zugangskontrollvorrichtung emittierten oder verursachten kurzreichweitigen Signale übermittelt werden, so dass die Auswertung des Signals und die Identifizierung der Zugangskontrollvorrichtung, der sich ein mobiles elektronisches Gerät am nächsten befindet im mobilen elektronischen Gerät erfolgt und das Ergebnis über den ersten Standard an das Zugangskontrollsystem übermittelt wird.

Gemäß der Erfindung ist bei einem Zugangskontrollsystem für Personen oder Fahrzeuge, wobei das Zugangskontrollsystem einen mehrspurigen Zugang aufweist und wobei jeder Zugangsspur eine Zugangskontrollvorrichtung zugeordnet ist, vorgesehen, dass der zumindest einen Zugangskontrollvorrichtung zumindest ein elektronisches Bauteil, umfassend zumindest einen Elektromagneten zugeordnet ist, mittels dessen das Magnetfeld gezielt in einem definierten Bereich um die Zugangskontrollvorrichtung derart beeinflussbar ist, dass dies von einem sich in diesem Bereich befindenden mobilen elektronischen Gerät erfasst werden kann, wobei der Bereich derart gewählt ist, dass sich in diesem Bereich bei einem Zugangskontrollsystem für Personen nur eine Person oder bei einem Zugangskontrollsystem für Fahrzeuge nur ein Fahrzeug befinden kann, wobei das elektronische Bauteil derart ausgeführt und/oder angeordnet und/oder abgeschirmt ist, dass die Beeinflussung des Magnetfeldes in einem definierten Winkelbereich um die Zugangskontrollvorrichtung erfassbar ist, wodurch die Beeinflussung des Magnetfeldes nur von mobilen elektronischen Geräten erfassbar ist, die sich in Zugangsrichtung der Zugangskontrollvorrichtung und entlang der Zugangsspur nähern und wobei die Elektromagnete derart ansteuerbar sind, dass das erzeugte Magnetfeld eine der Zugangskontrollvorrichtung zugeordnete eindeutige Charakteristik aufweist.

Im Rahmen einer Weiterbildung der Erfindung wird für den Fall einer Zugangskontrollvorrichtung für Fahrzeuge vorgeschlagen, zusätzlich oder alternativ zu einer Induktionsschleife, welche nach dem Stand der Technik zur Erkennung eines an einer Parksäule in der Einfahrt bzw. Ausfahrt stehenden Fahrzeugs und zur Aktivierung der entsprechenden Zugangskontrollvorrichtung verwendet wird, in der Einfahrt bzw. Ausfahrt zumindest einen Magnetfeldsensor vorzusehen, der auf der Parksäule und/oder auf dem Schrankenbaum angebracht ist. Da Fahrzeuge viele Metallteile aufweisen, die das Magnetfeld um die Fahrzeuge beeinflussen, kann mittels des zumindest einen Magnetfeldsensors ein in der Einfahrt bzw. Ausfahrt stehendes Fahrzeug erkannt werden. Ferner kann anhand der Signale des zumindest einen Magnetfeldsensors erkannt werden, ob es sich bei einem in der Einfahrt bzw. Ausfahrt stehenden Fahrzeug um ein großes oder kleines Fahrzeug handelt, so dass in Abhängigkeit von der Größe des Fahrzeugs der Fahrer zu entsprechend dimensionierten Stellplätzen gelotst wird. Bei einem Zugangskontrollsystem für Fahrzeuge mit mehreren parallel zueinander angeordneten Zugangsspuren sind vorzugsweise einer Zugangsspur zwei Magnetfeldsensoren zugeordnet, so dass eine fehlerfreie Ermittlung der Zugangsspur, in der sich ein Fahrzeug befindet, realisierbar ist.

Die Zugangskontrollvorrichtungen eines Zugangskontrollsystems für Personen können in vorteilhafter Weise ohne Sperrorgane ausgeführt sein, wobei die Zugangskontrollvorrichtungen jeweils eine Vorrichtung zur Detektion von Personen aufweisen können, die die Zugangskontrollvorrichtung passieren. Beispielsweise kann die Vorrichtung zur Detektion von Personen als Lichtschranke oder Wiegesensor ausgeführt sein.

Wenn eine Person eine Zugangskontrollvorrichtung passiert, was durch die Vorrichtung zur Detektion von Personen erkannt wird, und nach dem Passieren dieser Person das in der der Zugangskontrollvorrichtung zugeordneten Spur gemäß dem Verfahren am nächsten befindliche mobile elektronische Gerät dasselbe ist, wie vor dem Passieren der Person, wird ein Zugang ohne Zugangsberechtigung erkannt und ein optisches und/oder akustisches Signal ausgegeben.

Alternativ können die Zugangskontrollvorrichtungen des Zugangskontrollsystems jeweils ein Sperrorgan aufweisen, welches im Öffnungssinne betätigt wird, wenn der übermittelten ID des der Zugangskontrollvorrichtung am nächsten befindlichen mobilen elektronischen Gerätes eine gültige Zugangsberechtigung zugeordnet ist. Wenn nach dem Passieren einer Person, was durch eine Vorrichtung zur Detektion von Personen oder durch die Betätigung des Sperrorgans erkannt wird, das in der der Zugangskontrollvorrichtung zugeordneten Spur gemäß dem Verfahren am nächsten befindliche mobile elektronische Gerät dasselbe ist, wie vor dem Passieren der Person, wird ein Zugang ohne Zugangsberechtigung erkannt und ein optisches und/oder akustisches Signal ausgegeben.

Die Erfindung wird im Folgenden anhand der beigefügten Figuren beispielhaft näher erläutert. Es zeigen:
Figur 1: eine schematische Darstellung einer Zugangskontrollvorrichtung eines Zugangskontrollsystems für Fahrzeuge zur Veranschaulichung eines Verfahrens zur Zugangskontrolle; und
Figur 2: eine schematische Darstellung eines Zugangskontrollsystems für Personen mit einem mehrspurigen Zugang, wobei jeder Zugangsspur eine Zugangskontrollvorrichtung zugeordnet ist, zur Veranschaulichung des erfindungsgemäßen Verfahrens.

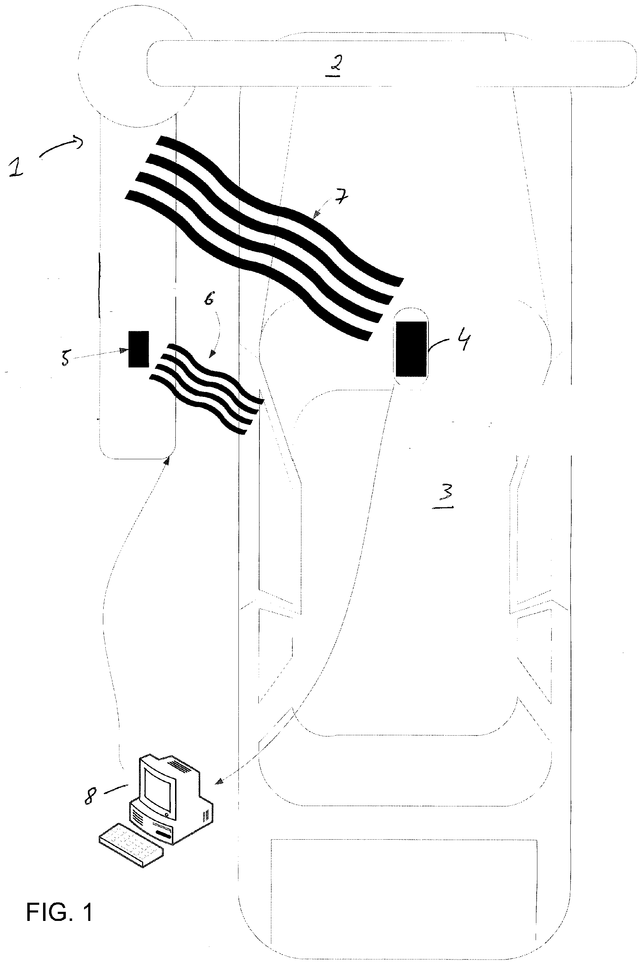

In Figur 1 ist eine Zugangskontrollvorrichtung für Fahrzeuge dargestellt, umfassend eine Parksäule 1 und einen Schrankenbaum 2, wobei ein Fahrzeug mit 3 bezeichnet ist. Gemäß der Erfindung erfolgt die Überprüfung der Zugangsberechtigung für das Fahrzeug 3 anhand der Auswertung einer von einem der Zugangskontrollvorrichtung in Zugangsrichtung am nächsten befindlichen mobilen elektronischen Gerät 4 durch einen ersten Standard im Rahmen eines "Broadcasting" in regelmäßigen Abständen gesendeten ID, der zumindest eine Zugangsberechtigung eindeutig zugeordnet ist, welche von mit einem Computer 8 umfassend eine CPU und Speichermittel verbundenen Sende- Empfangseinheiten in Reichweite des mobilen elektronischen Gerätes 4 empfangen wird.

Bei dem gezeigten Beispiel wird ein mobiles elektronisches Gerät 4 als das der Zugangskontrollvorrichtung in Zugangsrichtung am nächsten befindliche mobile elektronische Gerät 4 erkannt, wenn das mobile elektronische Gerät 4 ein kurzreichweitiges Signal 7 empfängt, welches von der Zugangskontrollvorrichtung emittiert wird oder durch die Zugangskontrollvorrichtung verursacht wird und eine Reichweite aufweist, die einen Bereich um die Zugangskontrollvorrichtung abdeckt, in dem sich nur ein Fahrzeug befinden kann. Bei dem gezeigten Beispiel ist die Parksäule aus Metall oder umfasst Metallteile, so dass das Magnetfeld 7 um die Zugangskontrollvorrichtung beeinflusst wird, was durch einen Magnetfeldsensor des mobilen elektronischen Gerätes 4 detektiert wird, wenn es sich in dem Bereich um eine Zugangskontrollvorrichtung befindet, in dem die Beeinflussung des Magnetfeldes durch die Zugangskontrollvorrichtung erfassbar ist. In diesem Bereich kann sich dimensionsbedingt lediglich ein Fahrzeug befinden.

Wenn das mobile elektronische Gerät 4, das sich bei dem gezeigten Beispiel im Fahrzeug 3 hinter der Windschutzscheibe befindet, die Beeinflussung des Magnetfeldes 7 durch die Parksäule 1 erfasst, wird im Rahmen des "Broadcasting" mittels des ersten Standards auch die Information an den Computer 8 übermittelt, dass das mobile elektronische Gerät 4 das kurzreichweitige Signal, nämlich die Beeinflussung des Magnetfeldes, empfängt, welches von der Zugangskontrollvorrichtung verursacht ist. Anschließend wird die im Rahmen des "Broadcasting" in regelmäßigen Abständen vom mobilen elektronischen Gerät 4 gesendete ID ausgewertet, wobei, wenn dieser ID eine gültige Zugangsberechtigung zugeordnet ist, die datentechnisch mit dem Computer 8 verbundene Zugangskontrollvorrichtung derart gesteuert wird, dass der Schrankenbaum 2 im Öffnungssinne betätigt wird.

Bezugnehmend auf Figur 1, weist die Zugangskontrollvorrichtung zusätzlich oder alternativ zu einer Induktionsschleife, welche nach dem Stand der Technik zur Erkennung eines an einer Parksäule 1 in der Einfahrt bzw. Ausfahrt stehenden Fahrzeugs und zur Aktivierung der entsprechenden Zugangskontrollvorrichtung verwendet wird, einen Magnetfeldsensor 5 auf, der auf der Parksäule 1 angebracht ist, mittels dessen ein in der Einfahrt bzw. Ausfahrt stehendes Fahrzeug 3 erkannt wird.

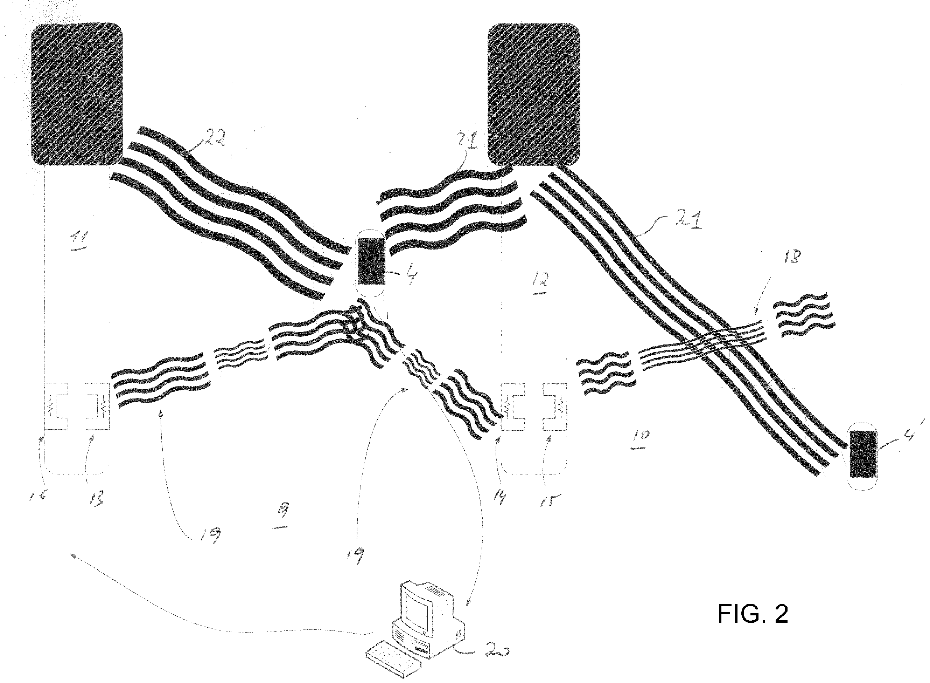

Gegenstand der Figur 2 ist ein Zugangskontrollsystem für Personen mit einem mehrspurigen Zugang, wobei zwei Zugangsspuren 9, 10 gezeigt werden und jeder Zugangsspur 9, 10 eine Zugangskontrollvorrichtung 11, 12 zugeordnet ist. Hierbei sind jeder Zugangskontrollvorrichtung 11, 12 zwei elektronische Bauteile, umfassend zumindest einen Elektromagneten zugeordnet, mittels dessen das Magnetfeld gezielt in einem definierten Bereich um die Zugangskontrollvorrichtung derart beeinflussbar ist, dass dies von einem sich in diesem Bereich befindenden mobilen elektronischen Gerät 4, 4' erfasst werden kann, wobei der Bereich derart gewählt ist, dass sich in diesem Bereich nur eine Person befinden kann. Bei dem Beispiel gemäß Figur 2 sind mit 13 und 14 die der Zugangskontrollvorrichtung 11 zugeordneten elektronischen Bauteile bezeichnet, wobei mit 15 ein der Zugangskontrollvorrichtung 12 zugeordnetes elektronisches Bauteil bezeichnet ist; ferner ist mit 16 ein weiteres elektronisches Bauteil bezeichnet, welches einer nicht dargestellten, weiteren Zugangskontrollvorrichtung zugeordnet ist. Die elektronischen Bauteile 13, 14, 15, 16 sind zudem derart ausgeführt und/oder angeordnet und/oder abgeschirmt, dass die Beeinflussung des Magnetfeldes in einem definierten Winkelbereich um die jeweilige Zugangskontrollvorrichtung erfassbar ist, wodurch die Beeinflussung des Magnetfeldes nur von mobilen elektronischen Geräten 4, 4' erfassbar ist, die sich in Zugangsrichtung der jeweiligen Zugangskontrollvorrichtung und entlang der Zugangsspur nähern. Die Elektromagnete der elektronischen Bauteile werden ferner derart angesteuert, dass das von den einer Zugangskontrollvorrichtung zugeordneten elektronischen Bauteilen erzeugte Magnetfeld eine eindeutige der Zugangskontrollvorrichtung zugeordnete Charakteristik aufweist, die sich von der Charakteristik der den weiteren Zugangskontrollvorrichtungen zugeordneten elektronischen Bauteilen erzeugten Magnetfeldern unterscheidet, um auf diese Weise die jeweilige Zugangskontrollvorrichtung über die Charakteristik des Magnetfeldes zu identifizieren. Beispielsweise können die von den elektronischen Bauteilen 13, 14 erzeugten Magnetfelder 19 derart amplitudenmoduliert werden, dass sie sich vom vom elektronischen Bauteil 15 erzeugten Magnetfeld 18 eindeutig hinsichtlich der Amplitudenmodulation unterscheiden.

Gemäß der Erfindung wird ein mobiles elektronisches Gerät 4 als das der Zugangskontrollvorrichtung 11 in Zugangsrichtung am nächsten befindliche mobile elektronische Gerät erkannt, wenn das mobile elektronische Gerät 4 ein kurzreichweitiges Signal 19, welches bei dem gezeigten Beispiel dem mittels der der Zugangskontrollvorrichtung 11 zugeordneten elektronischen Bauteile 13, 14 erzeugten Magnetfeld entspricht, empfängt. Bei dem gezeigten Beispiel sind jeder Zugangskontrollvorrichtung zwei elektronische Bauteile zugeordnet; alternativ kann jeder Zugangskontrollvorrichtung ein elektronisches Bauteil zugeordnet sein.

Bei dem gezeigten Beispiel detektiert das mobile elektronische Gerät 4, welches als Smartphone ausgeführt ist, das Magnetfeld beider elektronischer Bauteile 13, 14, die der Zugangskontrollvorrichtung 11 zugeordnet sind, so dass es gemäß der Erfindung als das der Zugangskontrollvorrichtung 11 am nächsten befindliche mobile elektronische Gerät erkannt wird, wobei nach der Detektion des Magnetfeldes im Rahmen des "Broadcasting" über den ersten Standard die Charakteristik, z.B. der Amplitudenverlauf oder Amplitudenverhältnisse des Magnetfeldes in einem definierten Zeitintervall mitgesendet werden, wobei im Computer 20 anhand der Charakteristik die Zugangskontrollvorrichtung 11, der sich das mobile elektronischen Gerät 4 am nächsten befindet, identifiziert wird. In Figur 2 sind mit den Bezugszeichen 21, 22 die von der von den Zugangskontrollvorrichtungen 12, 11 beeinflussten Magnetfelder bezeichnet, die ebenfalls durch einen Magnetfeldsensor der mobilen elektronischen Geräte detektiert werden, wenn sich diese in einem Bereich um eine Zugangskontrollvorrichtung 12, 11 befinden, in dem die Beeinflussung des Magnetfeldes durch die Metallteile der Zugangskontrollvorrichtung 12, 11 erfassbar ist. Zur Ermittlung des einer Zugangskontrollvorrichtung 11, 12 am nächsten befindlichen mobilen elektronischen Geräts werden jedoch bei dem gezeigten Beispiel die mittels der der jeweiligen Zugangskontrollvorrichtung zugeordneten elektronischen Bauteile erzeugten Magnetfelder herangezogen

## Patentansprüche

1. Verfahren zur Zugangskontrolle bei einem Zugangskontrollsystem für Personen oder Fahrzeuge, wobei das Zugangskontrollsystem einen mehrspurigen Zugang aufweist, wobei jeder Zugangsspur eine Zugangskontrollvorrichtung (11, 12) zugeordnet ist, wobei die Überprüfung einer Zugangsberechtigung anhand der Auswertung einer von einem einer Zugangskontrollvorrichtung (11, 12) des Zugangskontrollsystems in Zugangsrichtung am nächsten befindlichen mobilen elektronischen Gerät (4, 4') durch einen ersten Standard im Rahmen eines "Broadcasting" in regelmäßigen Abständen gesendeten ID, der zumindest eine Zugangsberechtigung eindeutig zugeordnet ist, erfolgt, welche von mit einem Computer (8, 20) umfassend eine CPU und Speichermittel verbundenen Sende- Empfangseinheiten in Reichweite des mobilen elektronischen Gerätes (4, 4') empfangen wird, wobei ein mobiles elektronisches Gerät (4,4') als das einer Zugangskontrollvorrichtung (11, 12) in Zugangsrichtung am nächsten befindliche mobile elektronische Gerät (4, 4') erkannt wird, wenn mittels eines zweiten Standards, der eine geringere Reichweite als der erste Standard aufweist welche nur einen Bereich um die Zugangskontrollvorrichtung (11, 12) abdeckt, in dem sich bei einem Zugangskontrollsystem für Personen nur eine Person oder bei einem Zugangskontrollsystem für Fahrzeuge nur ein Fahrzeug befinden kann, eine Verbindung zwischen dem mobilen elektronischen Gerät (4, 4') und der Zugangskontrollvorrichtung (11, 12) hergestellt wird wobei im Rahmen des "Broadcasting" mittels des ersten Standards die Information übermittelt wird, dass mittels des zweiten Standards eine Verbindung zwischen einem mobilen elektronischen Gerät (4,4') und der Zugangskontrollvorrichtung (11, 12) hergestellt ist, wobei bei Herstellung einer Verbindung über den zweiten Standard zwischen dem mobilen elektronischen Gerät (4, 4') und einer Zugangskontrollvorrichtung (11, 12) über den zweiten Standard an das mobile elektronische Gerät eine ID der Zugangskontrollvorrichtung (11, 12) übermittelt wird, die im Rahmen des "Broadcasting" über den ersten Standard mitgesendet wird, um die Zugangskontrollvorrichtung (11, 12), der sich das mobile elektronischen Gerät (4, 4') am nächsten befindet, zu identifizieren.

2. Verfahren zur Zugangskontrolle nach Anspruch 1, **dadurch gekennzeichnet, dass** der zweite Standard ein Bluetooth, NFC oder RFID Standard ist.

3. Verfahren zur Zugangskontrolle bei einem Zugangskontrollsystem für Personen oder Fahrzeuge, wobei das Zugangskontrollsystem einen mehrspurigen Zugang aufweist, wobei jeder Zugangsspur eine Zugangskontrollvorrichtung (11, 12) zugeordnet ist, wobei die Überprüfung einer Zugangsberechtigung anhand der Auswertung einer von einem einer Zugangskontrollvorrichtung (11, 12) des Zugangskontrollsystems in Zugangsrichtung am nächsten befindlichen mobilen elektronischen Gerät (4, 4') durch einen ersten Standard im Rahmen eines "Broadcasting" in regelmäßigen Abständen gesendeten ID, der zumindest eine Zugangsberechtigung eindeutig zugeordnet ist, erfolgt, welche von mit einem Computer (8, 20) umfassend eine CPU und Speichermittel verbundenen Sende-Empfangseinheiten in Reichweite des mobilen elektronischen Gerätes (4, 4') empfangen wird, wobei ein mobiles elektronisches Gerät (4, 4') als das einer Zugangskontrollvorrichtung (11, 12) in Zugangsrichtung am nächsten befindliche mobile elektronische Gerät (4, 4') erkannt wird, wenn das mobile elektronische Gerät (4,4') ein kurzreichweitiges Signal empfängt, welches von der Zugangskontrollvorrichtung (11, 12) emittiert wird und von einem Magnetfeldsensor eines mobilen elektronischen Gerätes (4, 4') empfangen werden kann, wobei der jeweiligen Zugangskontrollvorrichtung (11, 12) zumindest ein elektronisches Bauteil (13, 14, 15, 16), umfassend zumindest einen Elektromagneten zugeordnet ist, mittels dessen das Magnetfeld gezielt in einem definierten Bereich um die Zugangskontrollvorrichtung (11, 12) derart beeinflussbar ist, dass dies von einem sich in diesem Bereich befindenden mobilen elektronischen Gerät (4, 4') erfasst werden kann, wobei der Bereich derart gewählt ist, dass sich in diesem Bereich bei einem Zugangskontrollsystem für Personen nur eine Person oder bei einem Zugangskontrollsystem für Fahrzeuge nur ein Fahrzeug befinden kann, wobei der zumindest eine Elektromagnet derart angesteuert wird, dass das erzeugte Magnetfeld eine der Zugangskontrollvorrichtung (11, 12) zugeordnete eindeutige Charakteristik aufweist, welche im Rahmen des "Broadcasting" über den ersten Standard mitgesendet wird, um die Zugangskontrollvorrichtung (11, 12), der sich das mobile elektronischen Gerät (4, 4') am nächsten befindet, zu identifizieren oder welche im mobilen elektronischen Gerät (4, 4') ausgewertet wird, wobei das Ergebnis im Rahmen des "Broadcasting" über den ersten Standard mitgesendet wird.

4. Verfahren zur Zugangskontrolle nach Anspruch 3, **dadurch gekennzeichnet, dass** der erste Standard eine Reichweite aufweist, die mindestens so groß ist, wie die Reichweite des von den Zugangskontrollvorrichtungen (11, 12) emittierten Signals, wobei die Reichweite des von den Zugangskontrollvorrichtungen (11, 12) emittierten Signals die maximale Entfernung zu der jeweiligen Zugangskontrollvorrichtung ist (11, 12), bei der das Signal von einem mobilen elektronischen Gerät (4, 4') noch erfassbar ist.

5. Verfahren zur Zugangskontrolle nach Anspruch 1, 2 ,3 oder 4, **dadurch gekennzeichnet, dass** der erste Standard ein Bluetooth Low Energy-Standard, ein WLAN-Standard oder ein UWB-Standard ist.

6. Verfahren zur Zugangskontrolle nach Anspruch 3, **dadurch gekennzeichnet, dass** das zumindest eine elektronische Bauteil (13, 14, 15, 16) derart ausgeführt und/oder angeordnet und/oder abgeschirmt ist, dass die Beeinflussung des Magnetfeldes in einem definierten Winkelbereich um die Zugangskontrollvorrichtung (11, 12) erfassbar ist, wodurch die Beeinflussung des Magnetfeldes nur von mobilen elektronischen Geräten (4, 4') erfassbar ist, die sich in Zugangsrichtung der Zugangskontrollvorrichtung und entlang der Zugangsspur nähern.

7. Verfahren zur Zugangskontrolle nach einem der vorangehenden Ansprüche, **dadurch gekennzeichnet, dass** für den Fall einer Zugangskontrollvorrichtung für Fahrzeuge, zusätzlich oder alternativ zu einer Induktionsschleife, welche nach dem Stand der Technik zur Erkennung eines an einer Parksäule (1) in der Einfahrt bzw. Ausfahrt stehenden Fahrzeugs und zur Aktivierung der entsprechenden Zugangskontrollvorrichtung verwendet wird, in der Einfahrt bzw. Ausfahrt zumindest ein Magnetfeldsensor (5) vorgesehen ist, der auf der Parksäule (1) und/oder auf einem Schrankenbaum (2) angebracht ist, wobei mittels des zumindest einen Magnetfeldsensors (5) ein in der Einfahrt bzw. Ausfahrt stehendes Fahrzeug (3) erkannt wird.

8. Verfahren zur Zugangskontrolle nach Anspruch 7, **dadurch gekennzeichnet, dass** anhand der Signale des zumindest einen Magnetfeldsensors (5) erkannt wird, ob es sich bei einem in der Einfahrt bzw. Ausfahrt stehenden Fahrzeug (3) um ein großes oder kleines Fahrzeug (3) handelt, so dass in Abhängigkeit von der Größe des Fahrzeugs (3) der Fahrer zu entsprechend dimensionierten Stellplätzen gelotst wird.

9. Verfahren zur Zugangskontrolle nach einem der vorangehenden Ansprüche 1-6, **dadurch gekennzeichnet, dass** bei einem Zugangskontrollsystem für Personen die zumindest eine Zugangskontrollvorrichtung (11, 12) kein Sperrorgan aufweist, wobei wenn eine Person eine Zugangskontrollvorrichtung (11, 12) passiert, dies durch eine Vorrichtung zur Detektion von Personen erkannt wird, wobei, wenn nach dem Passieren dieser Person das in der der Zugangskontrollvorrichtung (11, 12) zugeordneten Spur (9, 10) am nächsten befindliche mobile elektronische Gerät (4, 4') dasselbe ist, wie vor dem Passieren der Person, ein Zugang ohne Zugangsberechtigung erkannt und ein optisches und/oder akustisches Signal ausgegeben wird.

10. Verfahren zur Zugangskontrolle nach einem der vorangehenden Ansprüche 1-8, **dadurch gekennzeichnet, dass** bei einem Zugangskontrollsystem für Personen die zumindest eine Zugangskontrollvorrichtung (11, 12) ein Sperrorgan aufweist, welches im Öffnungssinne betätigt wird, wenn der übermittelten ID des der Zugangskontrollvorrichtung (11, 12) am nächsten befindlichen mobilen elektronischen Gerätes eine gültige Zugangsberechtigung zugeordnet ist, wobei wenn eine Person eine Zugangskontrollvorrichtung (11, 12) passiert, dies durch eine Vorrichtung zur Detektion von Personen oder durch die Betätigung des Sperrorgans erkannt wird, wobei, wenn nach dem Passieren dieser Person das in der der Zugangskontrollvorrichtung (11, 12) zugeordneten Spur (9, 10) am nächsten befindliche mobile elektronische Gerät (4, 4') dasselbe ist, wie vor dem Passieren der Person, ein Zugang ohne Zugangsberechtigung erkannt und ein optisches und/oder akustisches Signal ausgegeben wird.

11. Zugangskontrollsystem für Personen oder Fahrzeuge mit mehrspurigem Zugang, wobei jeder Zugangsspur eine Zugangskontrollvorrichtung (11, 12) zugeordnet ist, ausgebildet zur Durchführung des Verfahrens nach einem der vorangehenden Ansprüche 3-10, bei dem die Überprüfung einer Zugangsberechtigung anhand der Auswertung einer von einem einer Zugangskontrollvorrichtung (11, 12) des Zugangskontrollsystems in Zugangsrichtung am nächsten befindlichen mobilen elektronischen Gerät (4, 4'), welches Teil des Zugangskontrollsystems ist, durch einen ersten Standard im Rahmen eines "Broadcasting" in regelmäßigen Abständen gesendeten ID, der zumindest eine Zugangsberechtigung eindeutig zugeordnet ist, erfolgt, welche von mit einem Computer (8,20) umfassend eine CPU und Speichermittel verbundenen Sende- Empfangseinheiten in Reichweite des mobilen elektronischen Gerätes (4, 4') empfangen wird, **dadurch gekennzeichnet, dass** der jeweiligen Zugangskontrollvorrichtung (11, 12) zumindest ein elektronisches Bauteil (13, 14, 15, 16), umfassend zumindest einen Elektromagneten zugeordnet ist, mittels dessen das Magnetfeld gezielt in einem definierten Bereich um die Zugangskontrollvorrichtung (11, 12) derart beeinflussbar ist, dass dies von einem sich in diesem Bereich befindenden mobilen elektronischen Gerät (4, 4') erfasst werden kann, wobei der Bereich derart gewählt ist, dass sich in diesem Bereich bei einem Zugangskontrollsystem für Personen nur eine Person oder bei einem Zugangskontrollsystem für Fahrzeuge nur ein Fahrzeug befinden kann, wobei das elektronische Bauteil (13, 14, 15, 16) derart ausgeführt und/oder angeordnet und/oder abgeschirmt ist, dass die Beeinflussung des Magnetfeldes in einem definierten Winkelbereich um die Zugangskontrollvorrichtung (11, 12) erfassbar ist, wodurch die Beeinflussung des Magnetfeldes nur von mobilen elektronischen Geräten (4, 4') erfassbar ist, die sich in Zugangsrichtung der Zugangskontrollvorrichtung (11, 12) und entlang der Zugangsspur nähern und wobei die Elektromagnete derart ansteuerbar sind, dass das erzeugte Magnetfeld eine der Zugangskontrollvorrichtung (11, 12) zugeordnete eindeutige Charakteristik aufweist, wobei das mobile elektronische Gerät (4,4'), dazu
ausgebildet ist, die eindeutige Charakteristik im Rahmen des "Broadcasting" über den ersten Standard mitzusenden, um die Zugangskontrollvorrichtung (11, 12), der sich das mobile elektronischen Gerät (4,4') am nächsten befindet, zu identifizieren oder wobei das mobile elektronische Gerät (4,4'), dazu
ausgebildet ist, die eindeutige Charakteristik auszuwerten und das Ergebnis im Rahmen des "Broadcasting" über den ersten Standard mitzusenden.

## Claims

1. A method for controlling access in an access control system for persons or vehicles, wherein the access control system has a multi-lane access, wherein each access lane is assigned an access control device (11, 12), wherein the checking of an access authorization is carried out by means of the evaluation of an ID transmitted at regular intervals by a mobile electronic device (4, 4') located closest to an access control device (11, 12) of the access control system in an access direction, by a first standard in the context of broadcasting, to which ID at least one access authorization, which is received by transceiver units connected to a computer (8, 20) comprising a CPU and storage means, within range of the mobile electronic device (4, 4'), is assigned in an unambiguous manner, wherein a mobile electronic device (4, 4') is identified as the mobile electronic device (4, 4') located closest to an access control device (11, 12) in the access direction, if a connection is established between the mobile electronic device (4, 4') and the access control device (11, 12) by means of a second standard, which has a smaller range than the first standard which only covers an area around the access control device (11, 12), in which only one person can be located, in the case of an access control system for people, or in which only one vehicle can be located, in the case of an access control system for vehicles, wherein in the context of broadcasting by means of the first standard, the information that a connection is established between the mobile electronic device (4, 4') and the access control device (11, 12) by means of the second standard is transmitted, wherein when a connection is established via the second standard between the mobile electronic device (4, 4') and an access control device (11, 12), an ID of the access control device (11, 12) is transmitted via the second standard to the mobile electronic device, which is also transmitted via the first standard in the context of broadcasting, in order to identify the access control device (11, 12) to which the mobile electronic device (4, 4') is most closely located.

2. The method for controlling access according to claim 1, **characterized in that** the second standard is a Bluetooth, NFC or RFID standard.

3. The method for controlling access in an access control system for persons or vehicles, wherein the access control system has a multi-lane access, wherein each access lane is assigned an access control device (11, 12), wherein the checking of an access authorization is carried out by means of the evaluation of an ID transmitted at regular intervals by a mobile electronic device (4, 4') located closest to an access control device (11, 12) of the access control system in an access direction, by a first standard in the context of broadcasting, to which ID at least one access authorization, which is received by transceiver units connected to a computer (8, 20) comprising a CPU and storage means, within ranges of the mobile electronic device (4, 4'), is assigned in an unambiguous manner, wherein a mobile electronic device (4, 4') is identified as the mobile electronic device (4, 4') located closest to an access control device (11, 12) in the access direction, if the mobile electronic device (4, 4') receives a short-range signal which is emitted by the access control device (11, 12) and can be received by a magnetic field sensor of a mobile electronic device (4, 4'), wherein the access control device (11, 12) in each case is assigned at least one electronic component (13, 14, 15, 16), comprising at least one electromagnet, by means of which the magnetic field can be influenced in a specific way in a defined area around the access control device (11, 12), in such a manner that this can be detected by a mobile electronic device (4, 4') located in this area, wherein the area is chosen in such a manner that only one person can be located in this area, in the case of an access control system for people, or only one vehicle, in the case of an access control system for vehicles, wherein the at least one electromagnet is controlled in such a manner that the generated magnetic field has unambiguous characteristics which are assigned to the access control device (11, 12) and which are also transmitted via the first standard in the context of broadcasting, in order to identify the access control device (11, 12) to which the mobile electronic device (4, 4') is most closely located, or which are evaluated in the mobile electronic device (4, 4'), wherein the result is also transmitted in the context of broadcasting via the first standard.

4. The method for access control according to claim 3, **characterized in that** the first standard has a range which is at least as great as the range of the signal emitted by the access control devices (11, 12), wherein the range of the signal emitted by the access control devices (11, 12) is the maximum distance from the respective access control device (11, 12) at which the signal can still be detected by a mobile electronic device (4, 4').

5. The method for controlling access according to claim 1, 2, 3 or 4, **characterized in that** the first standard is a Bluetooth Low-Energy standard, a WLAN standard or a UWB standard.

6. The method for controlling access according to claim 3, **characterized in that** the at least one electronic component (13, 14, 15, 16) is embodied and/or arranged and/or shielded in such a manner that the influencing of the magnetic field can be detected in a defined angular range around the access control device (11, 12), as a result of which the influencing of the magnetic field can only be detected by mobile electronic devices (4, 4') which approach in the access direction of the access control device and along the access lane.

7. The method for controlling access according to one of the preceding claims, **characterized in that** in the case of an access control device for vehicles, in addition or as an alternative to an induction loop, which is used according to the prior art to detect a vehicle standing at a parking column (1) in the entry or exit and to activate the corresponding access control device, at least one magnetic field sensor (5) is provided in the entry or exit which is attached to the parking column (1) and/or to a barrier boom (2), wherein by means of the at least one magnetic field sensor (5) a vehicle (3) standing in the entry or exit is identified.

8. The method for controlling access according to claim 7, **characterized in that** with the help of the signals of the at least one magnetic field sensor (5), it is possible to detect whether the vehicle (3) standing in the entry or exit is a large or small vehicle (3), so that the driver is guided to parking bays of a corresponding size, depending on the size of the vehicle (3).

9. The method for controlling access according to one of the preceding claims 1-6, **characterized in that** in the case of an access control system for people, the at least one access control device (11, 12) does not have a blocking member, wherein when a person passes an access control device (11, 12), this is detected by a device for detecting people, wherein if after this person has passed through, the mobile electronic device (4, 4') located closest in the lane (9, 10) assigned to the access control device (11, 12) is the same as prior to the person passing through, access without access authorization is detected and an optical and/or acoustic signal is triggered.

10. The method for controlling access according to one of the preceding claims 1-8, **characterized in that** in the case of an access control system for people, the at least one access control device (11, 12) has a blocking member which is activated to open when a valid access authorization is assigned to the transmitted ID of the mobile electronic device located closest to the access control device (11, 12), wherein when a person passes an access control device (11, 12), this is detected by a device for detecting people or through the activation of the blocking member, wherein if after this person has passed through, the mobile electronic device (4, 4') located closest in the lane (9, 10) assigned to the access control device (11, 12) is the same as prior to the person passing through, access without access authorization is detected and an optical and/or acoustic signal is triggered.

11. An access control system for people or vehicles having multi-lane access, wherein each access lane is assigned an access control device (11, 12), designed to carry out the method according to one of the preceding claims 3-10, in which the checking of an access authorization is carried out by means of the evaluation of an ID transmitted at regular intervals by a mobile electronic device (4, 4') located closest to an access control device (11, 12) of the access control system in an access direction, by a first standard in the context of broadcasting, to which ID at least one access authorization, which is received by transceiver units connected to a computer (8, 20) comprising a CPU and storage means, within range of the mobile electronic device (4, 4'), is assigned in an unambiguous manner, **characterized in that** the access control device (11, 12) in each case is assigned at least one electronic component (13, 14, 15, 16), comprising at least one electromagnet, by means of which the magnetic field can be influenced in a specific way in a defined area around the access control device (11, 12), in such a manner that this can be detected by a mobile electronic device (4, 4') located in this area, wherein the area is chosen in such a manner that only one person can be located in this area, in the case of an access control system for people, or only one vehicle, in the case of an access control system for vehicles, wherein the electronic component (13, 14, 15, 16) is embodied and/or arranged and/or shielded in such a manner that the influencing of the magnetic field can be detected in a defined angular range around the access control device (11, 12), as a result of which the influencing of the magnetic field can only be detected by mobile electronic devices (4, 4') which approach in the access direction of the access control device (11, 12) and along the access lane and wherein the electromagnets can be controlled in such a manner that the generated magnetic field has unambiguous characteristics which are assigned to the access control device (11, 12), wherein the mobile electronic device (4, 4') is configured also to transmit the unambiguous characteristics in the context of broadcasting via the first standard, in order to identify the access control device (11, 12) to which the mobile electronic device (4, 4') is most closely located, or wherein the mobile electronic device (4, 4') is designed to evaluate the unambiguous characteristics and also transmit the result in the context of broadcasting via the first standard.

## Revendications

1. Procédé de contrôle d'accès dans un système de contrôle d'accès pour personnes ou véhicules automobiles, sachant que le système de contrôle d'accès comporte un accès à plusieurs voies, sachant qu'à chaque voie d'accès est attribué un dispositif de contrôle d'accès (11, 12), sachant que la vérification d'une autorisation d'accès a lieu à l'aide de l'évaluation d'une ID (Identification) envoyée à intervalles réguliers par un appareil électronique mobile (4, 4') se trouvant le plus proche d'un dispositif de contrôle d'accès (11, 12) du système de contrôle d'accès dans la direction d'accès par un premier standard dans le cadre d'une « Diffusion », à laquelle est attribué clairement au moins une autorisation, laquelle est reçue par des unités d'émission-réception reliées à un ordinateur (8, 20) comprenant une UC (Unité Centrale) et un moyen de mémorisation à portée de l'appareil électronique mobile (4, 4'), sachant qu'un appareil électronique mobile (4, 4') est identifié comme l'appareil électronique mobile (4, 4') le plus proche d'un dispositif de contrôle d'accès (11, 12) dans la direction d'accès, lorsqu'au moyen d'un deuxième standard , qui comporte une portée plus faible que le premier standard , laquelle couvre seulement une zone autour du dispositif de contrôle d'accès (11, 12), dans laquelle peut se trouver seulement une personne pour un système de contrôle d'accès pour personnes ou seulement un véhicule automobile pour un système de contrôle d'accès pour véhicules automobiles, une liaison est établie entre l'appareil électronique mobile (4, 4') et le dispositif de contrôle d'accès (11, 12), sachant que dans le cadre de la « Diffusion » au moyen du premier standard, l'information est transmise, qu'au moyen du deuxième standard, une liaison est établie entre un appareil électronique mobile (4, 4') et le dispositif de contrôle d'accès (11, 12), sachant que lors de l'établissement d'une liaison par le biais du deuxième standard entre l'appareil électronique mobile (4, 4') et un dispositif de contrôle d'accès (11, 12) une ID du dispositif de contrôle d'accès (11, 12) est transmise à l'appareil électronique mobile par le biais du deuxième standard, qui est envoyée conjointement dans le cadre de la « Diffusion » par le biais du premier standard pour identifier le dispositif de contrôle d'accès (11, 12) qui se trouve au plus proche de l'appareil électronique mobile (4, 4').

2. Procédé de contrôle d'accès selon la revendication 1, **caractérisé en ce que** le deuxième standard est un standard Bluetooth, CCP (Communication en Champ Proche) ou IRF (Identification par Radiofréquence).

3. Procédé de contrôle d'accès dans un système de contrôle d'accès pour personnes ou véhicules automobiles, sachant que le système de contrôle d'accès comporte un accès à plusieurs voies, sachant qu'à chaque voie d'accès est attribué un dispositif de contrôle d'accès (11, 12), sachant que la vérification d'une autorisation d'accès a lieu à l'aide de l'évaluation d'une ID (Identification) envoyée à intervalles réguliers par un appareil électronique mobile (4, 4') se trouvant le plus proche d'un dispositif de contrôle d'accès (11, 12) du système de contrôle d'accès dans la direction d'accès par un premier standard dans le cadre d'une « Diffusion », à laquelle est attribué clairement au moins une autorisation, laquelle est reçue par des unités d'émission-réception reliées à un ordinateur (8, 20) comprenant une UC (Unité Centrale) et un moyen de mémorisation à portée de l'appareil électronique mobile (4, 4'), sachant qu'un appareil électronique mobile (4, 4') est identifié comme l'appareil électronique mobile (4, 4') le plus proche d'un dispositif de contrôle d'accès (11, 12) dans la direction d'accès, lorsque l'appareil électronique mobile (4, 4') reçoit un signal de courte portée, lequel est émis par le dispositif de contrôle d'accès (11, 12) et peut être reçu par un capteur de champ magnétique d'un appareil électronique mobile (4, 4'), sachant qu'au dispositif de contrôle d'accès respectif (11, 12) est attribué au moins un composant électronique (13, 14, 15, 16) comprenant au moins un électroaimant au moyen duquel l'électroaimant peut être influencé de manière précise dans une zone définie autour du dispositif de contrôle d'accès (11, 12) de telle manière que celui-ci peut être saisi par un appareil électronique mobile (4, 4') se trouvant dans cette zone, sachant que la zone est choisie de telle sorte que seulement une personne peut se trouver dans cette zone pour un système de contrôle d'accès pour personnes ou seulement un véhicule automobile pour un système de contrôle d'accès pour véhicules automobiles, sachant qu'au moins un électroaimant est activé de telle manière que le champ magnétique produit comporte une caractéristique claire attribuée au dispositif de contrôle d'accès (11, 12), laquelle est envoyée conjointement dans le cadre de la « Diffusion » par le biais du premier standard pour identifier le dispositif de contrôle d'accès (11, 12) qui se trouve au plus proche de l'appareil électronique mobile (4, 4') ou laquelle est évaluée dans l'appareil électronique mobile (4, 4'), sachant que le résultat est conjointement envoyé dans le cadre de la « Diffusion » par le biais du premier standard.

4. Procédé de contrôle d'accès selon la revendication 3, **caractérisé en ce que** le premier standard comporte une portée qui est au moins aussi grande que la portée du signal émis par les dispositifs de contrôle d'accès (11, 12), sachant que la portée du signal émis par les dispositifs de contrôle d'accès (11, 12) est la distance maximale par rapport au dispositif de contrôle d'accès respectif (11, 12) pour lequel le signal peut être encore saisi par un appareil électronique mobile (4, 4').

5. Procédé de contrôle d'accès selon la revendication 1, 2, 3 ou 4, **caractérisé en ce que** le premier standard est un standard Bluetooth de faible énergie, un standard RLR (Réseau Local Radioélectrique) ou un standard BUL (à Bande ultralarge).

6. Procédé de contrôle d'accès selon la revendication 3, **caractérisé en ce qu'**au moins un composant électronique (13, 14, 15, 16) est exécuté et/ou disposé et/ou protégé de telle sorte que l'influence du champ magnétique peut être saisie dans une zone angulaire définie autour du dispositif de contrôle d'accès (11, 12), l'influence du champ magnétique ne pouvant être de ce fait saisie que par des appareils électroniques mobiles (4, 4'), qui s'approchent dans la direction d'accès du dispositif de contrôle d'accès et le long de la voie d'accès.

7. Procédé de contrôle d'accès selon l'une quelconque des revendications précédentes, **caractérisé en ce que** pour le cas d'un dispositif de contrôle d'accès pour véhicules automobiles, en plus ou alternativement à une boucle d'induction, laquelle est utilisée selon l'état de la technique pour identifier un véhicule automobile se trouvant près d'une colonne de stationnement (1) dans l'entrée ou la sortie et pour activer le dispositif de contrôle d'accès correspondant, au moins un capteur de champ magnétique (5) est prévu dans l'entrée ou la sortie, qui est monté sur la colonne de stationnement (1) et/ou sur une barrière (2), sachant qu'un véhicule automobile (3) se trouvant dans l'entrée ou la sortie est identifié au moyen d'au moins un capteur de champ magnétique (5) .

8. Procédé de contrôle d'accès selon la revendication 7, **caractérisé en ce qu'**à l'aide des signaux d'au moins un capteur de champ magnétique (5), on identifie pour un véhicule automobile (3) se trouvant dans l'entrée ou la sortie, s'il s'agit d'un grand ou d'un petit véhicule automobile (3) de telle manière que le chauffeur est piloté vers les places de stationnement aux dimensions correspondantes en fonction de la taille du véhicule automobile (3).

9. Procédé de contrôle d'accès selon l'une quelconque des revendications précédentes 1-6, **caractérisé en ce que** pour un système de contrôle d'accès pour personnes, au moins le dispositif de contrôle d'accès (11, 12) ne comporte aucun organe de blocage, sachant que lorsqu'une personne passe par un dispositif de contrôle d'accès (11, 12), ceci est identifié par un dispositif de détection de personnes ou par l'actionnement de l'organe de blocage, sachant que lorsqu'après le passage de cette personne, l'appareil électronique mobile (4, 4') se trouvant le plus proche dans la voie (9, 10) attribuée au dispositif de contrôle d'accès (11, 12) est le même qu'avant le passage de la personne, un accès est identifié sans autorisation d'accès et un signal optique et/ou acoustique est émis.

10. Procédé de contrôle d'accès selon l'une quelconque des revendications précédentes 1-8, **caractérisé en ce que** pour un système de contrôle d'accès pour des personnes, au moins un dispositif de contrôle d'accès (11, 12) comporte un organe de blocage, lequel est actionné au sens d'ouverture, lorsqu'une autorisation d'accès valable est attribuée à l'ID transmise de l'appareil électronique mobile se trouvant le plus proche du dispositif de contrôle d'accès (11, 12), sachant que lorsqu'une personne passe par un dispositif de contrôle d'accès (11, 12), ceci est identifié par un dispositif de détection de personnes ou par l'actionnement de l'organe de blocage, sachant que lorsqu'après le passage de cette personne, l'appareil électronique mobile (4, 4') se trouvant le plus proche dans la voie (9, 10) attribuée au dispositif de contrôle d'accès (11, 12) est le même qu'avant le passage de la personne, un accès est identifié sans autorisation d'accès et un signal optique et/ou acoustique est émis.

11. Système de contrôle d'accès pour des personnes ou des véhicules automobiles avec un accès à plusieurs voies, sachant qu'un dispositif de contrôle d'accès (11, 12) est attribué à chaque voie d'accès, constitué pour exécuter le procédé selon les revendications précédentes 3-10, pour lequel la vérification d'au moins une autorisation d'accès a lieu à l'aide de l'évaluation d'une ID envoyée à intervalles réguliers par un premier standard dans le cadre d'une « Diffusion » par un appareil électronique mobile (4, 4') se trouvant au plus proche d'un dispositif de contrôle d'accès (11, 12) du système de contrôle d'accès dans la direction d'accès, lequel fait partie du système de contrôle d'accès, à laquelle est clairement attribuée une autorisation d'accès, laquelle est reçue à portée de l'appareil électronique mobile (4, 4') par des unités d'émission-réception reliées à un ordinateur (8, 20) comprenant une UC et un moyen de mémorisation, **caractérisé en ce qu'**au dispositif de contrôle d'accès respectif (11, 12) est attribué au moins un composant électronique (13, 14, 15, 16) comprenant au moins un électroaimant au moyen duquel le champ magnétique peut être influencé de manière précise dans une zone définie autour du dispositif de contrôle d'accès (11, 12) de telle manière que ceci peut être saisi par un appareil électronique mobile (4, 4') se trouvant dans cette zone, sachant que la zone est choisie de telle sorte que seulement une personne peut se trouver dans cette zone pour un système de contrôle d'accès pour personnes ou seulement un véhicule automobile pour un système de contrôle d'accès pour véhicules automobiles, sachant que le composant électronique (13, 14, 15, 16) est exécuté et/ou disposé et/ou protégé de telle manière que l'influence du champ magnétique dans une zone angulaire définie peut être saisie autour du dispositif de contrôle d'accès (11, 12), l'influence du champ magnétique ne pouvant être saisie de ce fait que par des appareils électroniques mobiles (4, 4') qui s'approchent dans la direction d'accès du dispositif de contrôle d'accès (11, 12) et le long de la voie d'accès et sachant que les électroaimants peuvent être activés de telle manière que le champ magnétique produit comporte une caractéristique claire attribuée au dispositif de contrôle d'accès (11, 12), sachant que l'appareil électronique mobile (4, 4') est constitué à cet effet pour envoyer conjointement la caractéristique claire dans le cadre de la « Diffusion » par le biais du premier standard pour identifier le dispositif de contrôle d'accès (11, 12) au plus près duquel se trouve l'appareil électronique mobile (4, 4') ou sachant que l'appareil électronique mobile (4, 4') est constitué à cet effet pour évaluer la caractéristique claire et envoyer conjointement le résultat dans le cadre de la « Diffusion » par le biais du premier standard.
